# FASCICULE DE BREVET EUROPEEN

(11) **EP 2 585 286 B1**
(45) Date de publication et mention de la délivrance du brevet: **18.03.2015**
(21) Numéro de dépôt: 11729954.5
(22) Date de dépôt: 24.06.2011
(51) Int. Cl.: B29D 30/06

(54) **LAMELLE POUR UNE GARNITURE D'UN MOULE DESTINE A LA VULCANISATION D'UNE BANDE DE ROULEMENT D'UN PNEUMATIQUE**
DÜNNE PLATTE ZUR AUSKLEIDUNG EINER FORM ZUR VULKANISIERUNG EINER REIFENLAUFFLÄCHE
THIN PLATE FOR A LINING OF A MOULD INTENDED FOR VULCANIZING A TYRE TREAD

(30) Priorité: 25.06.2010 FR 1055072
(43) Date de publication de la demande: 01.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DUSSEAUX, Jean-Raymond, 63040 Clermont-Ferrand Cedex 9 (FR)
(74) Mandataire: Demaure, Pierre-Yves
(86) Numéro de dépôt international: PCT/EP2011/060633
(87) Numéro de publication internationale: WO 2011/161248

(56) Documents cités:
- EP-A1- 0 558 870
- EP-A1- 0 868 955
- US-B1- 6 264 453

## Description

### DOMAINE DE L'INVENTION

La présente invention concerne une lamelle de garniture d'un moule pour la vulcanisation d'un pneumatique.

### ETAT DE LA TECHNIQUE

Il est connu du document EP0868955 un procédé de fabrication de pièces de moule utilisant la technique dite de fusion laser sélective (« Selective Laser Melting » en anglais) dans lequel des éléments de garniture, tels que des lamelles, sont produits par fusion sélective d'une poudre formée de grains, à l'aide d'un faisceau laser. Ce procédé permet de construire des lamelles par superposition de couches de grains agglomérés par le faisceau laser.

Un intérêt de cette technique est que la forme de la lamelle peut être modélisée par un ordinateur. Le laser peut être ainsi piloté par l'ordinateur pour former sélectivement les couches successives en respectant les dimensions de la lamelle modélisée.

La construction de la lamelle se fait à partir d'un plateau dont la surface est généralement plane. Ce plateau sert de base pour la construction de la lamelle par couches successives.

La première couche de grains agglomérés est formée directement sur le plateau. De par l'utilisation de la technique de fusion laser, cette première couche est soudée au plateau. Les autres couches de grains agglomérés sont ensuite formées successivement sur la première couche.

Une fois la lamelle formée, il est nécessaire de la désolidariser du plateau. Cette opération de désolidarisation est généralement réalisée par une découpe rapide à l'aide d'un fil.

Cependant, la désolidarisation de la lamelle du plateau peut entraîner une déformation de ladite lamelle. En effet, à chaque formation d'une couche de grains agglomérés par fusion laser, il se crée des contraintes mécaniques particulières entre ladite couche et la couche précédemment formée. Lorsque la lamelle est désolidarisée du plateau, les contraintes mécaniques existantes entres les couches se modifient et peuvent entraîner une déformation de la lamelle. Par exemple, dans le cas où la lamelle se présente sous la forme d'une plaque de faible épaisseur, celle-ci peut se courber dans sa longueur et/ou dans sa largeur, une fois désolidarisée du plateau. L'empreinte laissée sur le pneumatique par une lamelle déformée peut alors ne pas correspondre à la sculpture désirée sur le pneumatique. Aussi le document US 6264453-B décrit une lamelle pour une garniture d'un moule pour pneumatiques.

Il existe donc un besoin de garantir que les lamelles conservent leur forme même après leur désolidarisation du plateau sur lequel elles ont été fabriquées par fusion sélective par laser.

L'invention, comme définie dans la revendication 1, concerne ainsi une lamelle pour une garniture d'un moule destiné à la vulcanisation d'une bande de roulement d'un pneumatique, ladite lamelle étant fabriquée par fusion sélective par laser, ladite lamelle comprenant une partie d'ancrage configurée pour ancrer la lamelle dans un corps de la garniture, une partie de moulage configurée pour mouler au moins une découpure dans la bande de roulement du pneumatique. La lamelle comprend des moyens, de renfort uniquement présents au niveau de la partie d'ancrage de ladite lamelle.

Des formes préférentielles de l'invention sont définies dans les revendications dépendantes 2 à 6.

La lamelle comprend ainsi une partie de moulage et une partie d'ancrage.

La partie d'ancrage est destinée à maintenir la lamelle dans la garniture.

La partie de moulage est destinée à mouler une ou plusieurs découpures sur la bande de roulement d'un pneumatique.

Par découpure, il est désigné soit une rainure (« groove » en anglais) soit une incision (« sipe » en anglais).

Une rainure est une découpure dont les faces de matière ne se touchent pas dans les conditions usuelles de roulage. Généralement, la largeur d'une rainure est supérieure ou égale à 2 mm.

Une incision est une découpure dont les faces de matière se touchent dans les conditions usuelles de roulage. Généralement, la largeur d'une incision est inférieure à 2 mm.

La garniture est une pièce ou un ensemble de pièces du moule qui va mouler l'ensemble de la bande de roulement du pneumatique. La garniture comprend ainsi un corps de garniture définissant une cavité correspondant à la forme du pneumatique à vulcaniser, et une pluralité de lamelles reliées au corps de garniture.

Par l'expression « présent uniquement au niveau de la partie d'ancrage », on comprend que les moyens de renfort ne s'étendent pas sur la partie de moulage de la lamelle.

Ainsi, comme la partie d'ancrage de la lamelle est noyée dans le corps de la garniture, les moyens de renfort présents seulement dans la partie d'ancrage ne vont pas modifier la forme de la découpure qui est uniquement moulée par la partie de moulage de la lamelle.

L'invention permet donc de renforcer la lamelle sans modifier la forme de l'empreinte que ladite lamelle est apte à mouler dans une bande de roulement d'un pneumatique.

De préférence, les moyens de renfort ont la forme d'au moins une surépaisseur venue de matière avec la partie d'ancrage de la lamelle.

Les moyens de renfort sont fabriqués avec la lamelle par fusion sélective par laser. On réalise ainsi de manière simple et pratique lesdits moyens de renfort.

De préférence, la lamelle présente globalement une forme rectangulaire et la surépaisseur s'étend dans la longueur de ladite lamelle.

On évite ainsi des déformations dans la longueur de la lamelle.

En outre ou alternativement, la lamelle présente globalement une forme rectangulaire et la surépaisseur s'étend dans la largeur de ladite lamelle.

On évite ainsi des déformations dans la largeur de la lamelle.

La lamelle peut également comprendre un corps globalement rectangulaire et une tête venue de matière avec ledit corps.

Les lamelles ayant une telle forme présentent des risques de déformation plus importants lors de leur désolidarisation du plateau. L'invention trouve donc une application particulièrement avantageuse avec ce type de lamelle.

De préférence, les moyens de renforts sont également des moyens d'ancrage destinés à ancrer la lamelle dans le corps de garniture.

Les moyens de renfort peuvent faciliter l'ancrage de la lamelle dans le corps de garniture. On réalise alors l'ancrage de la lamelle dans le corps de garniture sans avoir à prévoir des moyens d'ancrage supplémentaires.

L'invention comme définie dans la revendication 7, concerne également une garniture comportant un corps de garniture et au moins une lamelle telle que décrite ci-dessus, ladite lamelle étant ancrée dans ledit corps de garniture.

L'invention concerne également un moule pour la vulcanisation d'un pneumatique comme défini dans la revendication 8, comportant une garniture telle que décrite ci-dessus.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la figure 1 représente une vue schématique en perspective d'une lamelle selon un premier mode de réalisation de l'invention ;
- la figure 2 représente une vue de côté de la lamelle de la figure 1 ;
- la figure 3 représente une vue schématique en perspective d'une lamelle selon un second mode de réalisation de l'invention ;
- la figure 4 représente une vue schématique en perspective d'un élément de garniture avec une lamelle selon la figure 1 et une lamelle selon la figure 3 ;
- la figure 5 représente une vue partielle en coupe d'un moule pour la vulcanisation d'un pneumatique comportant un élément de garniture selon la figure 4.
- la figure 6 représente une vue schématique en perspective d'une lamelle selon un troisième mode de réalisation de l'invention.

Dans la description qui va suivre, des éléments sensiblement identiques ou similaires seront désignés par des références identiques.

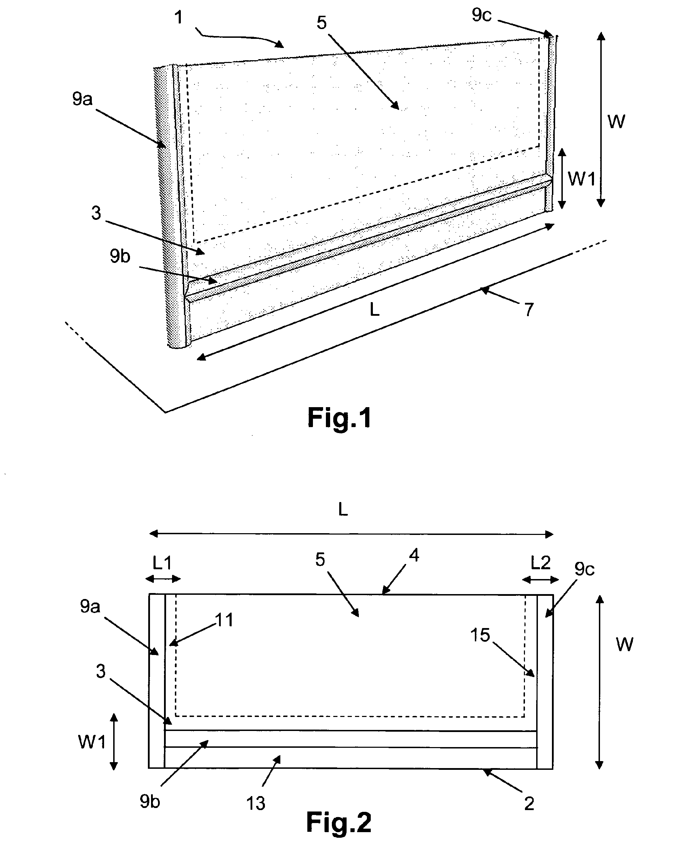

La figure 1 présente une vue en perspective d'une lamelle 1 selon un premier mode de réalisation de l'invention.

La lamelle 1 présente ici une forme globalement rectangulaire de longueur L et de largeur W.

Dans une variante de réalisation, la lamelle peut présenter une toute autre forme, telle qu'une forme ondulée.

Dans l'exemple de la figure 1, la lamelle 1 présente une épaisseur sensiblement constante. L'épaisseur de la lamelle 1 est par exemple de l'ordre de 0,4 mm. La lamelle 1 permet ainsi de mouler une incision dans une bande de roulement d'un pneumatique. Une incision est une découpure dont les faces de matière se touchent dans les conditions usuelles de roulage d'un pneumatique.

Dans une variante de réalisation, l'épaisseur de la lamelle 1 est variable dans la longueur L et/ou la largeur W de ladite lamelle 1.

La lamelle 1 comprend une partie d'ancrage configurée pour ancrer la lamelle 1 dans un corps d'une garniture d'un moule destiné à la vulcanisation de la bande de roulement du pneumatique. La partie d'ancrage comprend une première surface d'ancrage 3 s'étendant sur une première face de la lamelle 1 et une seconde surface d'ancrage (non visible sur la figure 1) s'étendant sur une seconde face de la lamelle. La première surface d'ancrage 3 a ici une forme en U.

La lamelle 1 comprend également une partie de moulage configurée pour mouler une incision dans la bande de roulement du pneumatique. La partie de moulage comprend une première surface de moulage 5 s'étendant sur la première face de la lamelle 1 et une seconde surface de moulage (non visible sur la figure 1) s'étendant sur la seconde face de la lamelle. La première surface de moulage 5 a ici une forme globalement rectangulaire.

La lamelle 1 est obtenue par fusion sélective d'une poudre formée de grains, à l'aide d'un faisceau laser. Ce procédé est également appelé frittage laser.

La poudre utilisée dans le procédé par fusion sélective est de préférence une poudre métallique. La lamelle 1 peut ainsi être en acier.

Dans une variante de réalisation, la poudre est une poudre céramique.

Dans le procédé par fusion sélective, la lamelle 1 est construite par superposition de couches de grains agglomérés par le faisceau laser. La lamelle 1 se présente alors sous la forme d'un élément stratifié.

Par agglomérés, on entend que les grains de la poudre sont raccordés ou soudés entre eux. Ainsi, lors de la fusion sélective, des zones de raccordement, appelés joints de grains, se forment dans un premier temps entre des grains adjacents. Dans un second temps, l'espacement entre les grains adjacents est comblé par des phénomènes de diffusion et d'écoulement plastique.

La fabrication de la lamelle 1 en N couches comprend différentes étapes, N étant un nombre entier supérieur à 1.

Dans une première étape, on dispose sur un plateau 7 la poudre formée de grains.

Dans une seconde étape, on vient fusionner sélectivement par un faisceau laser la poudre pour agglomérer tout ou partie des grains et former une première couche de grains agglomérés.

On répète la première étape et la seconde étape N-1 fois pour former la lamelle 1 par superposition de N couches de grains agglomérés.

La première couche de grains agglomérés est soudée au plateau 7. Une fois formée, la lamelle 1 est alors désolidarisée du plateau 7, par exemple par une découpe à l'aide d'un fil.

Afin d'éviter toute déformation de la lamelle 1 lors de la désolidarisation de ladite lamelle 1 avec le plateau 7, il est prévu selon l'invention des moyens de renfort 9a, 9b, 9c sur la lamelle 1.

Les moyens de renfort se présentent ici sous la forme de surépaisseurs venues de matière avec la partie d'ancrage de la lamelle 1. Par surépaisseur, on comprend un supplément de matière par rapport à l'épaisseur de la lamelle 1.

Plus particulièrement, les moyens de renfort comprennent une première surépaisseur 9a, une seconde surépaisseur 9b et une troisième surépaisseur 9c s'étendant sur la première face de la lamelle 1.

La première surépaisseur 9a s'étend sur toute la largeur W de la lamelle 1.

La seconde surépaisseur 9b s'étend partiellement sur la longueur L de la lamelle 1 perpendiculairement à la première surépaisseur 9a.

La troisième surépaisseur 9c s'étend sur toute la largeur W de la lamelle 1 parallèlement à la première surépaisseur 9a.

La première surépaisseur 9a, la seconde surépaisseur 9b, la troisième surépaisseur 9c sont venues de matière avec la première surface d'ancrage 3 de la lamelle 1. Ces surépaisseurs sont formées avec la lamelle 1 par superposition de couches de grains agglomérés, au cours du procédé par fusion sélective.

La première surépaisseur 9a et la troisième surépaisseur 9c permettent d'éviter des déformations de la lamelle 1 dans la largeur W de ladite lamelle 1.

La seconde surépaisseur 9b permet d'éviter des déformations de la lamelle 1 dans la longueur L de ladite lamelle 1.

La première surépaisseur 9a, la seconde surépaisseur 9b, la troisième surépaisseur 9c présentent ici une section en forme de demi-disque.

Dans une variante de réalisation, les sections de la première surépaisseur 9a, de la seconde surépaisseur 9b, de la troisième surépaisseur 9c peuvent être triangulaires ou en losange.

Toutes les combinaisons de forme de section entre les différentes surépaisseurs 9a, 9b, 9c sont possibles.

On notera que la seconde face de lamelle 1 peut présenter également des surépaisseurs (non représentées). Les surépaisseurs de la seconde face de la lamelle 1 peuvent être complémentaires à la première surépaisseur 9a, à la seconde surépaisseur 9b, à la troisième surépaisseur 9c. Par exemple, les surépaisseurs de la seconde face de la lamelle 1 peuvent être symétriques aux surépaisseurs 9a, 9b, 9c de la première face de la lamelle 1.

La figure 2 présente une vue de face de la lamelle 1 comprenant la première face de ladite lamelle 1.

La figure 2 présente de manière plus détaillée l'arrangement de la première surface d'ancrage 3 et de la première surface de moulage 5 sur la lamelle 1.

La première surface d'ancrage 3 présente une forme générale en U comprenant une première branche 11, une base 13 et une seconde branche 15.

La première branche 11 a une forme globalement rectangulaire de largeur correspondant à une première dimension L1.

La seconde branche 15 a une forme globalement rectangulaire de largeur correspondant à une seconde dimension L2.

La base 13 a une forme globalement rectangulaire de largeur correspondant à une troisième dimension W1.

La première surface de moulage 5 présente une forme globalement rectangulaire de largeur correspondant à la différence entre la largeur W de la lamelle et la troisième dimension W1 et de longueur correspondant à la différence entre la longueur de la lamelle L et la somme de la première dimension L1 avec la seconde dimension L2.

La première dimension L1 et la seconde dimension L2 sont déterminées de sorte que : L1+L2 ≤ ½*L.

Dans un mode préférentiel de réalisation, la première dimension L1 et la seconde dimension L2 sont égales.

De préférence, la troisième dimension W1 est déterminée de sorte que : W1≤ 1/2*W.

On notera que la première surépaisseur 9a et la troisième surépaisseur 9c sont disposées au plus proche d'un bord respectif de la lamelle 1.

On notera également que la seconde surépaisseur 9b est disposée à proximité d'un bord inférieur 2 de la lamelle 1 afin de limiter les déformations de ladite lamelle 1 lorsque celle-ci est désolidarisée du plateau sur lequel ladite lamelle a été formée. Il y a cependant suffisamment d'espace entre la seconde surépaisseur 9b et le bord inférieur 2 pour permettre le passage d'un outil coupant, tel qu'un fil, afin de désolidariser la lamelle du plateau.

Comme il a déjà été précisé, la lamelle 1 est désolidarisée du plateau au cours d'une opération de désolidarisation. Une fois désolidarisée, de manière connue en soi, la lamelle est placée dans un élément réalisé en matériau souple, par exemple un matériau à base d'un élastomère de type silastène. On vient ensuite couler du plâtre autour de l'élément en matériau souple pour former une matrice en plâtre. Après séchage, l'élément en matériau souple est enlevé et la lamelle 1 est maintenue dans la matrice en plâtre de sorte que la partie d'ancrage de la lamelle 1 soit visible. On vient ensuite couler de l'aluminium autour de la matrice en plâtre pour former un élément de garniture. L'aluminium vient au contact de la lamelle au niveau de la partie d'ancrage de ladite lamelle pour ancrer ladite lamelle dans l'élément de garniture.

Dans un mode préférentiel de l'invention, les moyens de renfort sont configurés de sorte à favoriser l'ancrage de la lamelle dans l'élément de garniture. Pour cela les moyens de renfort peuvent présenter une section en forme de demi disque ayant un rayon suffisamment important pour augmenter la surface de contact entre les moyens de renfort et l'aluminium de l'élément de garniture.

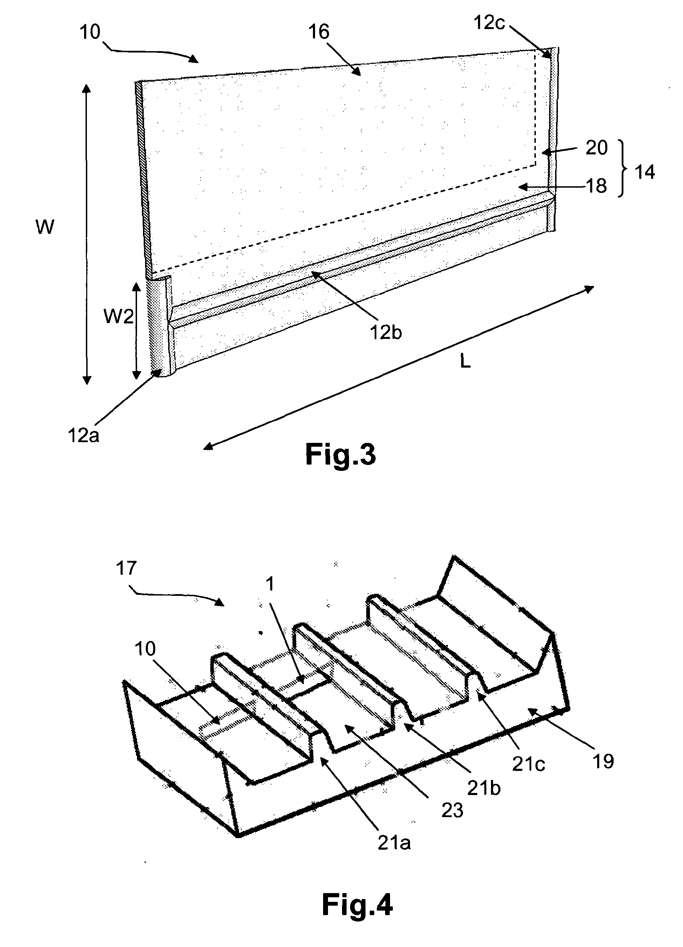

La figure 3 représente une vue schématique en perspective d'une lamelle 10 selon un second mode de réalisation.

La lamelle 10 présente ici une forme globalement rectangulaire de longueur L et de largeur W.

Plus particulièrement, la lamelle 10 comprend une partie d'ancrage configurée pour ancrer la lamelle 10 dans un corps d'une garniture d'un moule destiné à la vulcanisation de la bande de roulement du pneumatique. La partie d'ancrage comprend une première surface d'ancrage 14 s'étendant sur une première face de la lamelle 10 et une seconde surface d'ancrage (non représentée sur la figure 3) s'étendant sur une seconde face de la lamelle. La première surface d'ancrage 14 a ici une forme en L présentant une base 18 et une branche 20.

La lamelle 10 comprend également une partie de moulage configurée pour mouler une incision dans la bande de roulement du pneumatique. La partie de moulage comprend une première surface de moulage 16 s'étendant sur la première face de la lamelle 10 et une seconde surface de moulage (non représentée sur la figure 3) s'étendant sur la seconde face de la lamelle. La première surface de moulage 16 a une forme globalement rectangulaire.

La lamelle 10 comprend en outre une première surépaisseur 12a, une seconde surépaisseur 12b et une troisième surépaisseur 12c s'étendant sur la première face de la lamelle 1.

La première surépaisseur 12a s'étend partiellement sur la largeur W de la lamelle 10. La longueur de la première surépaisseur 12a correspond à une quatrième dimension W2. De préférence, la quatrième dimension W2 est déterminée de sorte que W2 ≤ ½*W.

La seconde surépaisseur 12b s'étend partiellement sur la longueur L de la lamelle 1 perpendiculairement à la première surépaisseur 12a.

La troisième surépaisseur 12c s'étend sur toute la largeur W de la lamelle 1 parallèlement à la première surépaisseur 12a.

La première surépaisseur 12a, la seconde surépaisseur 12b, la troisième surépaisseur 12c sont venues de matière avec la première surface d'ancrage 14 de la lamelle 10.

La figure 4 présente un élément de garniture 17 comprenant un corps de garniture 19.

Le corps de garniture 19 comprend un premier cordon 21a, un second cordon 21b et un troisième cordon 21c faisant saillie depuis un fond de garniture 23.

Les cordons 21a, 21b, 21c sont adaptés pour former des rainures dans la bande de roulement d'un pneumatique.

L'élément de garniture 17 comprend également une première lamelle 1 conforme au premier mode de réalisation de la figure 1 et une seconde lamelle 10 conforme au second mode de réalisation de la figure 3.

La première lamelle 1 et la seconde lamelle 10 sont ancrées dans le corps de garniture 19 par le procédé décrit ci-dessus.

Ainsi, la première lamelle 1 est ancrée dans le premier cordon 21a par l'intermédiaire de la première branche 11 de la première surface d'ancrage 3, en référence à la figure 1. La première lamelle 1 est également ancrée dans le fond de garniture 23 par l'intermédiaire de la base 13. Enfin, la première lamelle 1 est ancrée dans le second cordon 21b par l'intermédiaire de la seconde branche 15 de la première surface d'ancrage 3.

La seconde lamelle 10 est ancrée dans le premier cordon 21 a par l'intermédiaire de la branche 20 de la première surface d'ancrage 14, en référence à la figure 3. La seconde lamelle 1 est également ancrée dans le fond de garniture 23 par l'intermédiaire de la base 18 de la première surface d'ancrage14. La seconde lamelle 10 n'est pas ici ancrée dans un second cordon.

Le choix d'utiliser des premières lamelles et/ou des secondes lamelles dépend du nombre de cordons présents et donc de la sculpture désirée sur la bande de roulement du pneumatique.

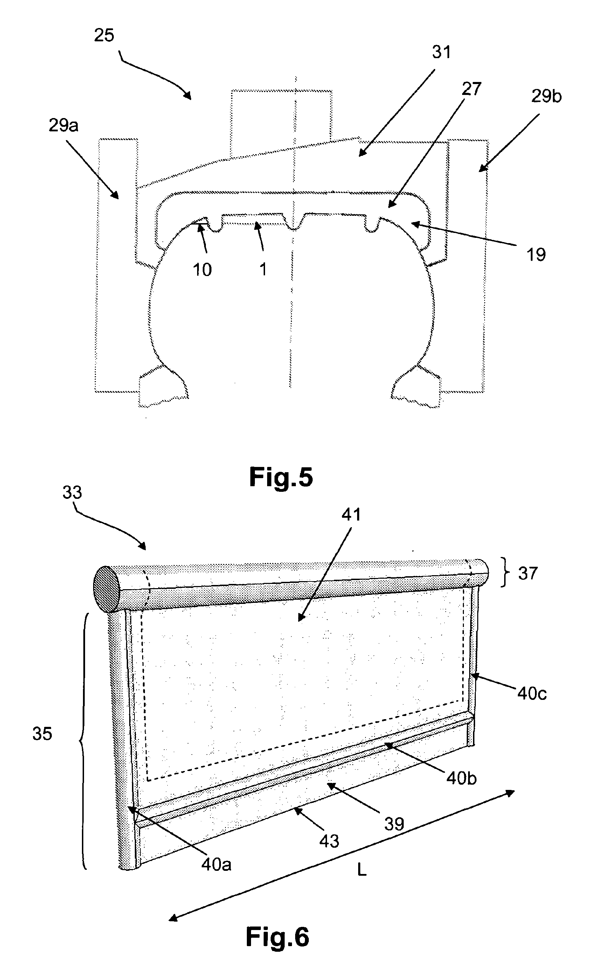

La figure 5 présente une vue en coupe d'un moule 25 pour la vulcanisation d'un pneumatique comportant une garniture 27. La garniture est formée d'une pluralité d'éléments de garniture conformes à la figure 4.

Le moule 25 comporte également deux coquilles 29a, 29b et des secteurs 31. Un seul secteur 31 est représenté sur la figure 5.

Les deux coquilles 29a, 29b et les secteurs 31 forment une couronne périphérique.

Le moule 25 est ici représenté dans une position fermée. Dans cette position, le moule 25 délimite une cavité toroïdale dont la forme correspond à la forme d'un pneumatique à mouler.

La figure 6 représente une vue schématique en perspective d'une lamelle 33 selon un troisième mode de réalisation de l'invention.

Dans ce troisième mode de réalisation, la lamelle 33 comprend un corps 35 globalement rectangulaire et une tête 37 venue de matière avec ledit corps 35. La tête 37 s'étend parallèlement à la longueur L du corps 35.

La tête 37 est ici globalement cylindrique avec une section de forme circulaire.

En variante, la section de la tête peut avoir une toute autre forme, telle qu'une forme en V ou en U.

La tête 37 est venue de matière avec le corps 35.

La lamelle 33 est ainsi apte à mouler une découpure de type goutte d'eau dans la bande de roulement.

La lamelle 33 comprend une partie d'ancrage 39 configurée pour ancrer la lamelle 33 dans un corps d'une garniture du moule de la figure 5.

La lamelle 33 comprend également une partie de moulage 41 configurée pour mouler une incision dans la bande de roulement du pneumatique.

La lamelle 33 comprend également des moyens de renfort 40a, 40b, 40c.

Les moyens de renfort 40a, 40b, 40c sont disposés dans la partie d'ancrage de la lamelle 33. Plus particulièrement, les moyens de renfort 40a, 40b, 40c sont venus de matière avec le corps 35 de la lamelle 33.

Le corps 35 de la lamelle 33 présente un bord 43 formé lors de la désolidarisation de la lamelle 33 avec un plateau.

Le bord 43 est opposé à la tête 37 sur la lamelle 33.

Du fait de la distance entre le bord 43 et la tête 37, la lamelle 33 présente des risques de déformations plus importants lors de sa désolidarisation avec le plateau. L'utilisation des moyens de renfort 40a, 40b, 40c est donc particulièrement avantageuse pour ce type de lamelle 33 en vue de limiter les déformations de ladite lamelle 33.

## Revendications

1. Lamelle pour une garniture (27) d'un moule (25) destiné à la vulcanisation d'une bande de roulement d'un pneumatique, ladite lamelle (1 ; 10 ; 33) étant fabriquée par fusion sélective par laser, ladite lamelle comprenant :
- une partie d'ancrage (3 ; 14 ; 39) configurée pour ancrer la lamelle (1 ; 10 ; 33) dans un corps (19) de la garniture (27) ;
- une partie de moulage (5 ; 16 ; 41) configurée pour mouler au moins une découpure dans la bande de roulement du pneumatique ;
**caractérisée en ce que** la lamelle (1 ; 10 ; 33) comprend des moyens de renfort (9a, 9b, 9c ; 12a, 12b, 12c ; 40a, 40b, 40c), lesdits moyens de renfort étant présents uniquement au niveau de la partie d'ancrage (3 ; 14 ; 39) de ladite lamelle.

2. Lamelle selon la revendication 1 **caractérisée en ce que** les moyens de renfort (9a, 9b, 9c ; 12a, 12b, 12c ; 40a, 40b, 40c) ont la forme d'au moins une surépaisseur venue de matière avec la partie d'ancrage de la lamelle (3 ; 14 ; 39).

3. Lamelle selon la revendication 2 **caractérisée en ce que** la lamelle a globalement une forme rectangulaire et la surépaisseur s'étend dans la longueur (L) de ladite lamelle.

4. Lamelle selon la revendication 2 **caractérisée en ce que** la lamelle a globalement une forme rectangulaire et la surépaisseur s'étend dans la largeur (1) de ladite lamelle.

5. Lamelle selon l'une quelconque des revendications 1 à 4 **caractérisée en ce que** la lamelle (33) comprend un corps (35) globalement rectangulaire et une tête (37) venue de matière avec ledit corps (35).

6. Lamelle selon l'une quelconque des revendications précédentes **caractérisée en ce que** les moyens de renforts (9a, 9b, 9c ; 12a, 12b, 12c ; 40a, 40b, 40c) sont également des moyens d'ancrage pour ancrer la lamelle dans le corps de garniture (19).

7. Garniture d'un moule (25) pour la vulcanisation d'un pneumatique comportant un corps de garniture (19) et au moins une lamelle (1 ; 10 ; 33) selon l'une quelconque des revendications 1 à 6, ladite lamelle (1 ; 10 ; 33) étant ancrée dans ledit corps de garniture.

8. Moule pour la vulcanisation d'un pneumatique comportant une garniture (27) selon la revendication 7.

## Patentansprüche

1. Lamelle für einen Einsatz (27) einer Form (25), die zur Vulkanisierung eines Luftreifen-Laufstreifens bestimmt ist, wobei die Lamelle (1; 10; 33) durch selektives Laserschmelzen hergestellt wird, wobei die Lamelle enthält:
- einen Verankerungsteil (3; 14; 39), der zum Verankern der Lamelle (1; 10; 33) in einem Körper (19) des Einsatzes (27) konfiguriert ist;
- einen Formgebungsteil (5; 16; 41), der zum Formen mindestens eines Einschnitts im Laufstreifen des Luftreifens konfiguriert ist;
**dadurch gekennzeichnet, dass** die Lamelle (1; 10; 33) Verstärkungseinrichtungen (9a, 9b, 9c; 12a, 12b, 12c; 40a, 40b, 40c) enthält, wobei die Verstärkungseinrichtungen nur im Bereich des Verankerungsteils (3; 14; 39) der Lamelle vorhanden sind.

2. Lamelle nach Anspruch 1, **dadurch gekennzeichnet, dass** die Verstärkungseinrichtungen (9a, 9b, 9c; 12a, 12b, 12c; 40a, 40b, 40c) die Form mindestens einer Überdicke aus einem Stück mit dem Verankerungsteil der Lamelle (3; 14; 39) haben.

3. Lamelle nach Anspruch 2, **dadurch gekennzeichnet, dass** die Lamelle global eine rechtwinklige Form hat, und die Überdicke sich in der Länge (L) der Lamelle erstreckt.

4. Lamelle nach Anspruch 2, **dadurch gekennzeichnet, dass** die Lamelle global eine rechtwinklige Form hat, und die Überdicke sich in der Breite (1) der Lamelle erstreckt.

5. Lamelle nach einem der Ansprüche 1 bis 4, **dadurch gekennzeichnet, dass** die Lamelle (33) einen global rechtwinkligen Körper (35) und einen Kopf (37) aus einem Stück mit dem Körper (35) enthält.

6. Lamelle nach einem der vorhergehenden Ansprüche, **dadurch gekennzeichnet, dass** die Verstärkungseinrichtungen (9a, 9b, 9c; 12a, 12b, 12c; 40a, 40b, 40c) ebenfalls Verankerungseinrichtungen sind, um die Lamelle im Einsatzkörper (19) zu verankern.

7. Einsatz einer Form (25) zur Vulkanisierung eines Luftreifens, der einen Einsatzkörper (19) und mindestens eine Lamelle (1; 10; 33) nach einem der Ansprüche 1 bis 6 aufweist, wobei die Lamelle (1; 10; 33) im Einsatzkörper verankert ist.

8. Form zur Vulkanisierung eines Luftreifens, die einen Einsatz (27) nach Anspruch 7 aufweist.

## Claims

1. Blade for a lining (27) of a mould (25) intended for vulcanizing a tyre tread, the said blade (1; 10; 33) being produced by selective laser melting, the said blade comprising:
- an anchoring part (3; 14; 39) configured to anchor the blade (1; 10; 33) in a body (19) of the lining (27) ;
- a moulding part (5; 16; 41) configured to mould at least one cut in the tread of the tyre;
**characterized in that** the blade (1; 10; 33) comprises reinforcing means (9a, 9b, 9c; 12a, 12b, 12c; 40a, 40b, 40c), the said reinforcing means being present only in the anchoring part (3; 14; 39) of the said blade.

2. Blade according to Claim 1, **characterized in that** the reinforcing means (9a, 9b, 9c; 12a, 12b, 12c; 40a, 40b, 40c) take the form of at least one increase in thickness formed as one with the anchoring part of the blade (3; 14; 39).

3. Blade according to Claim 2, **characterized in that** the blade is of rectangular overall shape and the increase in thickness runs along the length (L) of the said blade.

4. Blade according to Claim 2, **characterized in that** the blade is of rectangular overall shape and the increase in thickness runs along the width (1) of the said blade.

5. Blade according to any one of Claims 1 to 4, **characterized in that** the blade (33) comprises a body (35) of rectangular overall shape and a head (37) formed as one with the said body (35).

6. Blade according to any one of the preceding claims, **characterized in that** the reinforcing means (9a, 9b, 9c; 12a, 12b, 12c; 40a, 40b, 40c) are also anchoring means for anchoring the blade in the lining body (19).

7. Lining of a mould (25) for vulcanizing a tyre comprising a lining body (19) and at least one blade (1; 10; 33) according to any one of Claims 1 to 6, the said blade (1; 10; 33) being anchored in the said lining body.

8. Mould for vulcanizing a tyre comprising a lining (27) according to Claim 7.
